# FASCICULE DE BREVET EUROPEEN

(11) **EP 3 579 992 B1**
(45) Date de publication et mention de la délivrance du brevet: **10.11.2021**
(21) Numéro de dépôt: 18706793.9
(22) Date de dépôt: 05.02.2018
(51) Int. Cl.: B21J 15/14, B25J 9/10, B23Q 3/06, B64F 5/10

(54) **DISPOSITIF DE MAINTIEN D'UN PANNEAU**
PANEELHALTEVORRICHTUNG
PANEL-RETAINING DEVICE

(30) Priorité: 09.02.2017 FR 1700146
(43) Date de publication de la demande: 18.12.2019
(73) Titulaire: Cybermeca, 17182 Perigny (FR)
(72) Inventeur: LEDOUX, Didier, 17180 Perigny (FR)
(74) Mandataire: Ipsilon
(86) Numéro de dépôt international: PCT/FR2018/050279
(87) Numéro de publication internationale: WO 2018/146406

(56) Documents cités:
- CN-A- 102 248 389
- CN-A- 103 878 605
- US-A- 1 834 294
- US-A- 5 617 622

## Description

### DOMAINE DE L'INVENTION

La présente invention concerne de manière générale le maintien de panneau(x) en vue d'une opération, telle que le rivetage. L'invention trouve une application particulièrement avantageuse à l'assemblage par rivetage de panneau(x) de structure aéronautique, par exemple avec un ou plusieurs accessoire(s) ou avec un autre panneau, mais ne se limite pas bien entendu au domaine aéronautique.

### ART ANTERIEUR

Un panneau de structure aéronautique nécessite généralement des opérations de rivetage du panneau avec une ou des pièces, telles que hublot, lisse ou longeron ou cadre de renfort, ou encore avec un autre panneau. En particulier, le fuselage d'un avion comporte des panneaux de forme générale semi-cylindrique ou courbe, et dont les largeurs d'extrémité opposées peuvent être différentes. Les panneaux sont usuellement des tôles.

Pour le rivetage d'un panneau, il est connu de brider le panneau sur une structure de réception, appelée palette, dont la forme est conçue pour recevoir spécifiquement ledit panneau.

La palette, munie du panneau à riveter, est alors chargée dans une machine de rivetage en étant fixée, de manière amovible, sur un cadre, appelé cadre de positionneur, de la machine.

La machine de rivetage comprend usuellement un châssis en forme générale de C qui présente une partie inférieure, appelée console inférieure, et une partie supérieure, appelée tête de rivetage, entre lesquelles est positionné le cadre auquel est fixé la palette qui porte le panneau à riveter.

On observe cependant que la variété des profils de panneaux, en particulier dans le cas de panneaux de fuselage d'un avion, nécessite de prévoir un grand nombre de palettes de différentes géométries, qui posent des problèmes de coût, de manipulation et d'encombrement.

Les documents US 1834294 (sur lequel se base le préambule de la revendication 1), CN103878605 et US5617622 décrivent des cadres réglables.

La présente invention a pour but de proposer un dispositif permettant de palier à tout ou partie des problèmes exposés ci-dessus.

En particulier un but de l'invention est de proposer un nouveau dispositif permettant de limiter l'usage ou de s'exempter de l'utilisation de palettes tout en conservant un bon maintien des panneaux en vue de l'opération de rivetage.

### RESUME DE L'INVENTION

A cet effet, l'invention a pour objet un dispositif selon la revendication 1.

Selon une caractéristique avantageuse de l'invention, chacun desdits systèmes de fixation comprend deux bras articulés l'un par rapport à l'autre et un dispositif de serrage couplé aux bras et permettant de pincer le panneau.

Selon une caractéristique avantageuse de l'invention, le dispositif comprend, pour chaque bras, un support par rapport auquel une extrémité dudit bras est articulée, et chaque support est monté déplaçable le long du longeron correspondant, à l'aide d'un système de motorisation de manière à pouvoir régler l'angle formé entre les deux bras et à pouvoir régler la position du système de fixation le long dudit longeron.

Selon une caractéristique avantageuse de l'invention, les deux supports sont reliés entre eux par un arbre, de préférence un arbre cannelé, qui s'étend parallèlement au longeron et qui est entrainable à pivotement autour de son axe par un système de motorisation, et les deux bras sont montés solidaires en rotation dudit arbre pour permettre de régler la position angulaire de l'ensemble des deux bras et du dispositif de serrage autour d'un axe parallèle à l'axe du longeron.

Selon une caractéristique avantageuse de l'invention, les extrémités de chaque longeron sont articulées l'une par rapport à une traverse du cadre, l'autre par rapport à l'autre traverse, et les extrémités des longerons articulées à une même traverse sont montées déplaçables l'une par rapport à l'autre le long de cette traverse.

Selon une caractéristique avantageuse de l'invention, chacune des faces du cadre est munie desdits systèmes de fixation.

Selon une caractéristique avantageuse de l'invention, le dispositif de serrage de chacun desdits systèmes de fixation comprend un mécanisme de serrage activable et désactivable, tel qu'un mécanisme de serrage à genouillère ou sauterelle de bridage, permettant de pincer ledit panneau, le système de fixation correspondant comprenant de préférence un moteur permettant d'activer ou de désactiver ledit mécanisme de serrage.

L'invention concerne également une installation comprenant :
- un dispositif de maintien tel que décrit ci-dessus,
- une structure support dudit dispositif de maintien, qui comprend :
   - un premier système de couplage permettant le couplage de l'une des traverses (12) du cadre à ladite structure support et le coulissement de ladite traverse selon un axe parallèle au plan du cadre et orthogonal à ladite traverse;
   - un deuxième système de couplage permettant le couplage de l'autre traverse à ladite structure support et, de préférence, le basculement du cadre autour d'un axe parallèle à ladite traverse.

Selon un aspect particulier, l'installation comprend une machine de rivetage qui comporte :
- une partie inférieure, appelée console inférieure, et
- une partie supérieure, appelée tête de rivetage, entre lesquelles est positionné le dispositif de maintien de panneau.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la figure 1 est une vue en perspective du dispositif de maintien de panneau, équipé d'un panneau, conformément à un mode de réalisation de l'invention ;
- la figure 2 est une vue d'une partie du dispositif de maintien de panneau conformément à un mode de réalisation de l'invention, montrant un système de déplacement des extrémités d'un côté des longerons ;
- la figure 3 est une vue d'une partie du dispositif de maintien de panneau conformément à un mode de réalisation de l'invention, montrant un système de fixation monté sur un des longerons et pinçant une partie d'un panneau ;
- la figure 4 est une vue de la partie du dispositif de maintien de panneau illustrée à la figure 3, selon un autre angle de vue ;
- la figure 5 est une vue d'une installation comprenant une structure support et un dispositif de maintien de panneau, conformément à un mode de réalisation de l'invention ;
- la figure 6 est une vue schématique d'une installation comprenant une machine de rivetage, une structure support et un dispositif de maintien de panneau, conformément à un mode de réalisation de l'invention.

### DESCRIPTION DETAILLEE

Le concept de l'invention est décrit plus complètement ci-après avec référence aux dessins joints, sur lesquels des modes de réalisation du concept de l'invention sont montrés. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes.

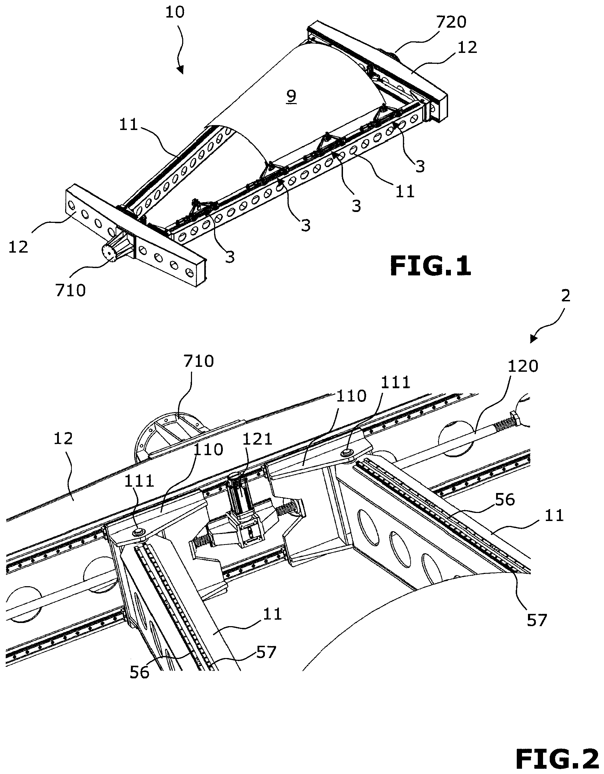

En référence aux figures et en particulier à la figure 1, l'invention concerne un dispositif pour le maintien d'un panneau 9, tel qu'un panneau à profil courbe.

Le panneau peut aussi être un panneau droit. Selon un mode de réalisation, un accessoire, tel qu'un hublot ou élément de renfort, est destiné à être riveté sur le panneau ainsi maintenu. Le dispositif de maintien peut être dimensionné de manière à maintenir plusieurs panneaux, par exemple pour le rivetage desdits panneaux entre eux.

Le dispositif de maintien comporte un cadre 10 à géométrie réglable qui comprend deux longerons 11 et deux traverses 12.

Un système de réglage 2 permet de régler la géométrie du cadre 10 formée par les longerons et les traverses. Le réglage est réalisé en fonction de la forme, dimension ou profil du panneau à maintenir.

Dans l'exemple illustré aux figures, le système de réglage 2 comprend, pour chaque traverse 12, un arbre fileté 120, un moteur associé 121, des pièces de liaison 110 des extrémités des longerons, et des articulations 111 entre lesdites pièces de liaison 110 et les extrémités des longerons 11.

Le rapprochement ou l'écartement des traverses 12 l'une par rapport à l'autre en fonction du déplacement des extrémités des longerons 11 est permis grâce à une mobilité de coulissement d'une traverse 12 par rapport à la structure support 7 selon une direction qui est parallèle au plan moyen du cadre et qui est orthogonale à ladite traverse 12.

Dans l'exemple illustré aux figures, cette mobilité de coulissement est formée par le système de couplage 72 dont une partie 720 solidaire de ladite traverse 12 est référencée à la figure 1. Une partie 710 du système de couplage 71 solidaire de l'autre traverse 12 est aussi référencée à la figure 1.

Des systèmes de fixation 3 couplés aux longerons 11 du cadre permettent la fixation du panneau 9 au cadre 10 en plusieurs endroits (ou points) dudit panneau 9. En particulier, le dispositif comprend au moins deux systèmes de fixation sur un longeron et au moins un système de fixation, de préférence plusieurs, sur l'autre longeron. Autrement dit, selon un mode préférentiel, chaque longeron 11 du cadre est muni d'une pluralité de systèmes de fixation 3 répartis le long du longeron 11.

Dans les exemples illustrés aux figures 1 à 5, on a représenté les systèmes de fixation sur un seul longeron. Bien entendu, l'autre longeron est aussi muni d'au moins un système de fixation, de préférence de plusieurs systèmes de fixation.

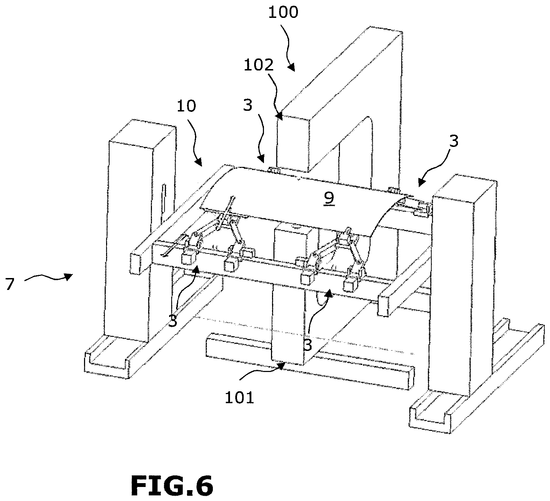

Dans la vue schématique de la figure 6, des systèmes de fixation 3 sont représentés sur chacun des longerons.

Ainsi, dans la suite de la description, les caractéristiques décrites en lien avec un longeron s'appliquent aussi à l'autre longeron.

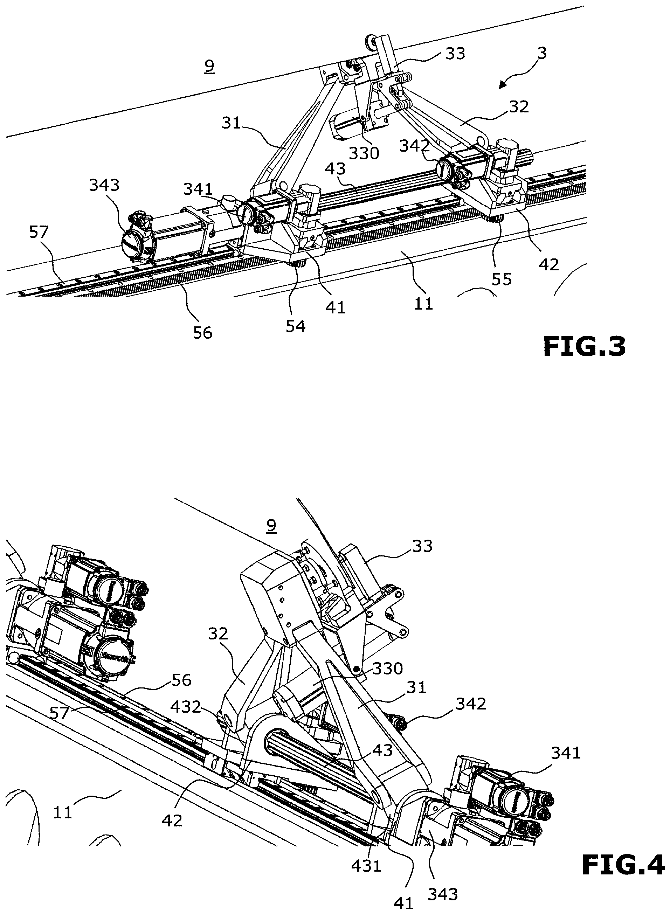

Comme plus particulièrement illustré aux figures 3 et 4, lesdits systèmes de fixation 3 sont montés coulissants le long des longerons 11. Chacun desdits systèmes de fixation 3 est aussi monté pivotant autour d'un axe parallèle à l'axe du longeron 11 qui le porte. Lesdits systèmes de fixation 3 sont montés mobiles indépendamment les uns des autres sur au moins une portion de leur chemin de déplacement.

Dans l'exemple illustré aux figures, chacun des systèmes de fixation 3 comprend deux bras 31, 32 articulés l'un par rapport à l'autre et un dispositif de serrage 33 couplé aux bras 31, 32 qui permet de pincer le panneau 9.

Les deux bras sont de préférence agencés en V renversé. En variante, les deux bras peuvent être agencés en X. Dans le cas d'une structure en X, chaque extrémité de branche du X opposée au longeron est munie d'un dispositif de serrage.

Les bras 31, 32 sont articulés au(x) dispositif(s) de serrage 33.

Dans l'exemple illustré aux figures, le dispositif de serrage 33 de chacun desdits systèmes de fixation 3 comprend un mécanisme de serrage activable et désactivable, tel qu'un mécanisme de serrage à genouillère ou sauterelle de bridage, permettant de pincer ledit panneau 9. Comme illustré plus particulièrement aux figures 3 et 4, le système de fixation 3 comprend de préférence un moteur 330 permettant d'activer ou de désactiver ledit mécanisme de serrage.

Chacun desdits bras 31, 32 présente, à une extrémité, une articulation au dispositif de serrage 33, et, à l'extrémité opposée, une articulation à une pièce de liaison 431, 432 qui relie ledit bras 31, 32 au support 41 ou 42 qui le porte, ce qui permet auxdits bras 31, 32 d'être articulés l'un par rapport à l'autre pour former un angle plus ou moins ouvert et ainsi de rapprocher ou écarter le dispositif de serrage 33 par rapport au longeron 11 correspondant.

Autrement dit, le dispositif de maintien de panneau comprend, pour chaque bras 31, 32 de système de fixation, un support 41, 42 par rapport auquel une extrémité dudit bras 31, 32, opposée au dispositif de serrage 33, est articulée. En particulier, chaque bras 31, 32 est monté articulé sur la pièce de liaison 431, 432 elle-même couplée au support 41, 42. Comme détaillé ci-après, chaque pièce de liaison 431, 432 est couplée au support 41, 42 correspondant en étant montée sur un arbre 43 porté par lesdits supports 41, 42.

Les supports 41, 42 sont ainsi reliés entre eux par l'arbre 43 sur lequel lesdits les bras 31, 32 sont montés solidaires en rotation. Les deux bras 31, 32 sont montés solidaires en rotation dudit arbre 43 par l'intermédiaire des pièces de liaison 431, 432 annulaires dont le pourtour intérieur coopère avec l'arbre 43. Dans l'exemple illustré aux figures, ledit arbre est un arbre cannelé.

L'extrémité de chaque bras 31, 32 opposée au dispositif de serrage 33 est articulée à la pièce de liaison 431, 432 correspondante qui est elle-même montée solidaire en rotation de l'arbre 43. En particulier dans le mode de réalisation illustré aux figures, la pièce de liaison 431, 432 est montée solidaire en déplacement du support 41, 42 correspondant en étant prise en sandwich entre deux joues formées par ledit support.

L'arbre 43 s'étend parallèlement au longeron 11 correspondant et est entrainable à pivotement autour de son axe par un système de motorisation 343 (figures 3 et 4). Il est ainsi possible de régler la position angulaire de l'ensemble des deux bras 31, 32 et du dispositif de serrage 33 autour d'un axe parallèle à l'axe du longeron.

Ainsi, chacun des bras 31, 32 est articulé par rapport à son support 41, 42 motorisé, autour d'un axe sensiblement orthogonal à l'axe du plan moyen dans lequel s'étendent lesdits bras, pour permettre d'ouvrir ou de fermer plus ou moins l'angle qu'ils forment entre eux, tout en étant montés solidaires en rotation de l'arbre 43 qui relie lesdits support 431, 432, ce qui permet de régler la hauteur du dispositif de serrage 33 par rapport au cadre.

Chaque support 41, 42 est monté coulissant le long du longeron 11 correspondant, à l'aide d'un système de motorisation 341, 342 de manière à pouvoir régler l'angle formé entre les deux bras 31, 32 et à pouvoir régler la position du système de fixation 3 le long dudit longeron 11.

Chaque support 41, 42 est monté coulissant indépendamment de l'autre support 42, 41, sur une course donnée, correspondant par exemple à la longueur de l'arbre 43 moins la distance d'encombrement des supports. On peut prévoir que chaque support peut être rapproché ou écarté de l'autre support par déplacement relatif desdits supports l'un par rapport à l'autre le long de l'arbre 43 qui les relie.

Pour chaque bras 31, 32 du système de fixation 3, le système de motorisation comprend un moteur 51, 52 porté respectivement par le support 41, 42 et qui entraine un pignon 54, 55 porté aussi par le support 41, 42 et venant en prise avec une crémaillère 56. La crémaillère 56 est fixée au longeron 11, qui s'étend le long du longeron 11 correspondant.

Les supports 41, 42 reposent sur un rail 57 disposé parallèlement au longeron, qui permet de guider le coulissement des supports 41, 42.

Dans l'exemple illustré aux figures, l'un 42 des supports peut coulisser, avec le bras 32 qu'il porte, via la pièce de liaison 432, le long dudit arbre cannelé 43. L'arbre cannelé 43 est monté solidaire en déplacement axial de l'autre support 41. L'arbre cannelé 43 est entrainable en pivotement autour de son axe par un moteur 343. Ledit moteur 343 est porté par le support 41.

Ainsi, le déplacement, le long du longeron 11, des supports 41, 42 qui portent les bras 31, 32, par l'intermédiaire de l'arbre 43 et des pièces de liaison 431, 432, permet non seulement de déplacer l'ensemble du système de fixation 3 correspondant le long dudit longeron, mais en outre le déplacement relatif entre ces deux support 41, 42 permet le positionnement relatif des deux supports, c'est-à-dire un positionnement plus ou moins rapprochés l'un de l'autre, ce qui permet de faire varier l'angle entre les bras et donc de rapprocher ou d'écarter le dispositif de serrage correspondant par rapport aux longerons.

En outre, la rotation de l'arbre 43 qui porte les deux bras 31, 32 permet de faire pivoter les deux bras 31, 32 et donc le dispositif de serrage 33 autour d'un axe parallèle à celui du longeron correspondant.

Comme rappelé ci-dessus et illustré plus particulièrement à la figure 2, dans l'exemple illustré aux figures, lesdites extrémités de longeron sont montées articulées sur des pièces de liaison 110 qui sont elles-mêmes montées sur un arbre 120 ou tige, de type vis sans fin, présentant deux portions filetées en sens opposés. La figure 2 ne montre que les extrémités des deux longerons couplées à l'une des traverses, mais bien entendu les extrémités des longerons couplées à l'autre traverse sont aussi articulées sur des pièces de liaison qui sont elles-mêmes montées sur un arbre ou tige, de type vis sans fin, présentant deux portions filetées en sens opposés. Ainsi, la description des extrémités des longerons situées d'un côté du cadre s'applique aussi aux extrémités opposées.

Comme illustré plus particulièrement à la figure 2, les extrémités de chaque longeron 11 sont articulées autour d'un axe 111 perpendiculaire au plan moyen du cadre, l'une par rapport à une traverse 12 du cadre, l'autre 11 par rapport à l'autre traverse 12, et les extrémités des longerons 11 articulées à une même traverse 12 sont montées déplaçables l'une par rapport à l'autre le long de cette traverse 12 de manière à pouvoir être rapprochées ou écartées l'une de l'autre, de préférence tout en restant chacune à égale distance du centre de la traverse correspondante.

Chaque pièce de liaison 110 présente un taraudage coopérant avec le filetage d'une portion de l'arbre 120. L'arbre 120 est couplé à un moteur 121 permettant son entrainement en rotation autour de son axe. Ainsi, du fait des filetage en sens opposé, ménagés sur ledit arbre 120, les extrémités des longerons qui sont couplées audit arbre 120 par l'intermédiaire des pièces de liaison 110 correspondantes sont déplacées en sens opposé l'une de l'autre le long de ladite traverse 12.

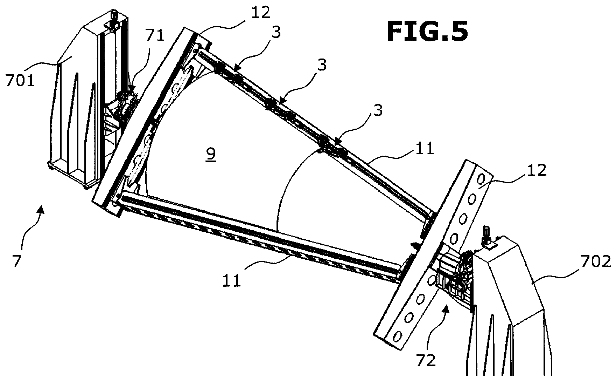

Comme plus particulièrement illustré à la figure 5, le dispositif de maintien décrit ci-dessus peut être utilisé dans une installation de rivetage qui comprend une structure support 7 dudit dispositif de maintien. Ladite structure support comprend une colonne 701 munie d'un premier système 71 de couplage et de coulissement permettant le couplage de l'une des traverses 12 du cadre 10 à ladite structure support 7 et le coulissement de ladite traverse 12 selon un axe parallèle au plan moyen du cadre 10 et orthogonal à ladite traverse 12. Ladite structure support comprend aussi une deuxième colonne 702 munie d'un deuxième système 72 de couplage et d'articulation permettant le couplage de l'autre traverse 12 à ladite structure support 7 et le basculement du cadre 10 autour d'un axe parallèle à ladite traverse 12. Les premier et le deuxième système 71, 72 présentent aussi une liaison à pivotement permettant au cadre de pivoter autour d'un axe médian orthogonal aux traverses 12.

Les premier et deuxième système 71, 72 sont aussi déplaçables en hauteur le long des colonnes de la structure support, pour permettre une montée ou descente du cadre ou encore le basculement ou inclinaison de celui-ci.

Comme illustré de manière schématique à la figure 6, l'installation comprend aussi une machine de rivetage 100 qui comporte une partie inférieure 101, appelée console inférieure, et une partie supérieure 102, appelée tête de rivetage, entre lesquelles est positionné le dispositif de maintien de panneau.

Avantageusement, un poste de pilotage (non représenté) est utilisé pour régler, de préférence automatiquement, la géométrie du cadre et la position et l'orientation des systèmes de fixation en fonction des caractéristiques du panneau à maintenir sur le cadre.

A cet effet, le poste de pilotage comprend une interface d'entrée de données, comprenant par exemple un écran et un clavier. Des profils de géométrie de cadre et de positionnement et/ou orientation des systèmes de fixation sont prédéfinis et mémorisés dans le poste de pilotage. Ces profils prédéfinis peuvent ainsi être sélectionnés par l'opérateur ou sélectionnés automatiquement en fonction des caractéristiques du panneau, par exemple rentrées dans le poste par l'opérateur. Une fois que le profil de réglage qui correspond au panneau à maintenir a été sélectionné, le poste de pilotage commande les motorisations du système de réglage et des systèmes de fixation pour obtenir la forme de cadre et les positions et orientations correspondant audit profil. Le panneau est alors amené sur le cadre au niveau des système de fixation et les dispositifs de serrage sont activés de manière à pincer ledit panneau pour le maintenir.

Le poste de pilotage se présente par exemple sous la forme d'une unité de traitement électronique et/ou informatique, par exemple sous forme d'un automate programmable industriel. Selon un mode de réalisation, ledit poste de pilotage comprend une mémoire pour mémoriser les profils de réglage et de positionnement et/ou orientation des systèmes de fixation et mémoriser les données des panneaux à maintenir, et un processeur pour sélectionner le profil de réglage correspondant au panneau à maintenir et transmettre des instructions de commande aux motorisations du dispositif. Avantageusement, le poste de pilotage permet aussi de commander les autres fonctions de l'installation de rivetage.

L'opération de rivetage d'un panneau maintenu sur le cadre peut alors s'effectuer avec les opérations suivantes :
- positionnement relatif du cadre du dispositif de maintien par rapport à la console inférieure 101 et à la tête de rivetage 102 à l'aide des mobilités des moyens de couplage 71, 72 du cadre et de la structure support ;
- rivetage d'un accessoire sur le panneau.

Avantageusement, avant l'opération de rivetage réalisée par la machine, l'accessoire à riveter est prépositionné sur le panneau de manière temporaire par des rivets provisoires posés à la main qui servent de positions de référence.

Les différentes mobilités permettent de positionner le panneau perpendiculairement à l'axe de perçage et de rivetage de la machine de rivetage. Avantageusement, chaque rivet posé est disposé selon une direction normale au profil du panneau. Ainsi, les différents degrés de mobilité sont utilisés pour obtenir la position et l'orientation relatives souhaitées entre ledit rivet et le panneau.

Selon un mode de réalisation, chacune des faces du cadre 10 est munie desdits systèmes de fixation 3 pour permettre de charger un panneau sur une face du cadre pendant que l'on décharge un panneau précédemment positionné sur l'autre face du cadre. En variante, on peut prévoir qu'une face seulement soit munie desdits systèmes de fixation à bras, et que, éventuellement, l'autre face soit munie de systèmes de fixation connus pour y fixer de manière amovible une structure de réception, appelée palette, destinée à recevoir une forme particulière de panneau.

L'invention n'est pas limitée aux modes de réalisation illustrés dans les dessins.

## Revendications

1. Dispositif pour le maintien d'un panneau (9), tel qu'un panneau à profil courbe, le dispositif comportant un cadre (10) qui comprend deux longerons (11) et deux traverses (12), ledit dispositif comprenant en outre :
- un système de réglage (2) de la géométrie du cadre (10) ;
- des systèmes de fixation (3) couplés aux longerons (11) du cadre pour permettre la fixation du panneau (9) au cadre (10) en plusieurs endroits dudit panneau (9), lesdits systèmes de fixation (3) étant montés déplaçables le long des longerons (11);
**caractérisé en ce que** chacun desdits systèmes de fixation (3) est aussi monté pivotant autour d'un axe parallèle à l'axe du longeron (11).

2. Dispositif selon la revendication 1, **caractérisé en ce que** chacun desdits systèmes de fixation (3) comprend deux bras (31, 32) articulés l'un par rapport à l'autre et un dispositif de serrage (33) couplé aux bras (31, 32) et permettant de pincer le panneau (9).

3. Dispositif selon la revendication 2, **caractérisé en ce que** le dispositif comprend, pour chaque bras (31, 32), un support (41, 42) par rapport auquel une extrémité dudit bras (31, 32) est articulée,
et **en ce que** chaque support (41, 42) est déplaçable le long du longeron (11) correspondant, à l'aide d'un système de motorisation (341, 342) de manière à pouvoir régler l'angle formé entre les deux bras (31, 32) et à pouvoir régler la position du système de fixation (3) le long dudit longeron (11).

4. Dispositif selon la revendication 3, **caractérisé en ce que** les deux supports (41, 42) sont reliés entre eux par un arbre (43), de préférence un arbre cannelé, qui s'étend parallèlement au longeron (11) et qui est entrainable à pivotement autour de son axe par un système de motorisation (343),
et **en ce que** les deux bras (31, 32) sont montés solidaires en rotation dudit arbre (43) pour permettre de régler la position angulaire de l'ensemble des deux bras (31, 32) et du dispositif de serrage (33) autour d'un axe parallèle à l'axe du longeron.

5. Dispositif selon l'une des revendications précédentes, **caractérisé en ce que** les extrémités de chaque longeron (11) sont articulées, l'une par rapport à une traverse (12) du cadre, l'autre par rapport à l'autre traverse (12); et les extrémités des longerons (11) articulées à une même traverse (12) sont montées déplaçables l'une par rapport à l'autre le long de cette traverse (12).

6. Dispositif selon l'une des revendications précédentes, **caractérisé en ce que** chacune des faces du cadre (10) est munie desdits systèmes de fixation (3).

7. Dispositif selon l'une des revendications précédentes prise en combinaison de la revendication 2, **caractérisé en ce que** le dispositif de serrage (33) de chacun desdits systèmes de fixation (3) comprend un mécanisme de serrage activable et désactivable, tel qu'un mécanisme de serrage à genouillère ou sauterelle de bridage, permettant de pincer ledit panneau (9),
le système de fixation (3) correspondant comprenant de préférence un moteur (330) permettant d'activer ou de désactiver ledit mécanisme de serrage.

8. Installation comprenant :
- un dispositif de maintien selon l'une des revendications précédentes,
- une structure support (7) dudit dispositif de maintien, qui comprend :
• un premier système (71) de couplage permettant le couplage de l'une des traverses (12) du cadre (10) à ladite structure support (7) et le coulissement de ladite traverse (12) selon un axe parallèle au plan du cadre (10) et orthogonal à ladite traverse (12) ;
• un deuxième système (72) de couplage permettant le couplage de l'autre traverse (12) à ladite structure support (7) et, de préférence, le basculement du cadre (10) autour d'un axe parallèle à ladite traverse (12).

9. Installation selon la revendication 8, ladite installation comprenant une machine de rivetage (100) qui comporte :
- une partie inférieure (101), appelée console inférieure, et
- une partie supérieure (102), appelée tête de rivetage, entre lesquelles est positionné le dispositif de maintien de panneau.

## Patentansprüche

1. Vorrichtung zum Halten eines Paneels (9) wie z. B. eines Paneels mit gekrümmtem Profil, wobei die Vorrichtung einen Rahmen (10) aufweist, der zwei Längsbalken (11) und zwei Querbalken (12) umfasst, wobei die Vorrichtung außerdem Folgendes umfasst:
- ein System zum Einstellen (2) der Geometrie des Rahmens (10);
- Befestigungssysteme (3), die mit den Längsbalken (11) des Rahmens gekoppelt sind, um die Befestigung des Paneels (9) an den Rahmen (10) an mehreren Stellen des Paneels (9) zu ermöglichen, wobei die Befestigungssysteme (3) verschiebbar entlang der Längsbalken (11) montiert sind,
**dadurch gekennzeichnet, dass** jedes der Befestigungssysteme (3) auch schwenkend um eine Achse parallel zur Achse des Längsbalkens (11) montiert ist.

2. Vorrichtung nach Anspruch 1, **dadurch gekennzeichnet, dass** jedes der Befestigungssysteme (3) zwei Arme (31, 32) umfasst, die miteinander gelenkig verbunden sind, und eine Spannvorrichtung (33), die an die Arme (31, 32) gekoppelt ist und ermöglicht, das Paneel (9) zu klemmen.

3. Vorrichtung nach Anspruch 2, **dadurch gekennzeichnet, dass** die Vorrichtung für jeden Arm (31, 32) eine Stütze (41, 42) umfasst, mit Bezug auf die ein Ende des Arms (31, 32) gelenkig verbunden ist,
und dadurch, dass jeder Stütze (41, 42) entlang des entsprechenden Längsbalkens (11) mit Hilfe eines Motorisierungssystems (341, 342) verschiebbar ist, um den Winkel einstellen zu können, der zwischen den zwei Armen (31, 32) gebildet ist, und die Position des Befestigungssystems (3) entlang des Längsbalkens (11) einstellen zu können.

4. Vorrichtung nach Anspruch 3, **dadurch gekennzeichnet, dass** die zwei Stützen (41, 42) miteinander durch eine Welle (43) verbunden sind, vorzugsweise eine Keilwelle, die sich parallel zum Längsbalken (11) erstreckt, und die schwenkend um ihre Achse durch eine Motorisierungssystem (343) angetrieben werden kann,
und dadurch, dass die zwei Arme (31, 32) drehfest mit der Welle (43) montiert sind, um zu ermöglichen, die Winkelposition der Einheit der zwei Arme (31, 32) und der Spannvorrichtung (33) um eine Achse parallel zur Achse des Längsbalkens einzustellen.

5. Vorrichtung nach einem der vorhergehenden Ansprüche, **dadurch gekennzeichnet, dass** die Enden jedes Längsbalkens (11) gelenkig verbunden sind, das eine mit Bezug auf einen Querbalken (12) des Rahmens, das andere mit Bezug auf den anderen Querbasken (12); und die Enden der Längsbalken (11), gelenkig verbunden mit einem gleichen Querbalken (12), verschiebbar mit Bezug aufeinander entlang dieses Querbalkens (12) montiert sind.

6. Vorrichtung nach einem der vorhergehenden Ansprüche, **dadurch gekennzeichnet, dass** jede der Seiten des Rahmens (10) mit den Befestigungssystemen (3) ausgestattet ist.

7. Vorrichtung nach einem der vorhergehenden Ansprüche in Kombination mit Anspruch 2, **dadurch gekennzeichnet, dass** die Spannvorrichtung (33) jedes der Befestigungssysteme (3) einen Spannmechanismus umfasst, der aktiviert und deaktiviert werden kann, wie z. B. einen Spannmechanismus mit Kniegelenk oder Schnellspanner, der es ermöglicht, das Paneel (9) zu klemmen, wobei das entsprechende Befestigungssystem (3) vorzugsweise einen Motor (330) umfasst, der ermöglicht, den Spannmechanismus zu aktivieren oder zu deaktivieren.

8. Anlage, umfassend:
- eine Haltevorrichtung nach einem der vorhergehenden Ansprüche,
- eine Strukturstütze (7) der Haltevorrichtung, die Folgendes umfasst:
• ein erstes Koppelsystem (71), das die Kopplung eines der Querbalken (12) des Rahmens (10) an die Stützstruktur (7) und das Gleiten des Querbalkens (12) gemäß einer Achse parallel zur Ebene des Rahmens (10) und orthogonal zu dem Querbalken (12) ermöglicht;
• ein zweites Koppelsystem (72), das die Kopplung des anderen Querbalkens (12) an die Stützstruktur (7) und vorzugsweise das Kippen des Rahmens (10) um eine Achse parallel zu dem Querbalken (12) ermöglicht.

9. Anlage nach Anspruch 8, wobei die Anlage eine Nietmaschine (100) umfasst, die Folgendes aufweist;
- einen unteren Teil (101), bezeichnet als untere Konsole, und
- einen oberen Teil (102), bezeichnet als Nietkopf, zwischen denen die Paneelhaltevorrichtung positioniert ist.

## Claims

1. A device for retaining a panel (9), such as a panel with a curved profile, the device including a frame (10) that comprises two side members (11) and two cross-members (12), said device further comprising:
- a system for adjusting (2) the geometry of the frame (10);
- attachment systems (3) coupled to the side members (11) of the frame so as to allow the attachment of the panel (9) to the frame (10) in several locations of said panel (9),
said attachment systems (3) being mounted movably along the side members (11); **characterized in that** each of said attachment systems (3) is also mounted pivoting about an axis parallel to the axis of the side member (11).

2. The device according to claim 1, **characterized in that** each of said attachment systems (3) comprises two arms (31, 32) that are hinged relative to one another and a clamping device (33) coupled to the arms (31, 32) and making it possible to grip the panel (9).

3. The device according to claim 2, **characterized in that** the device comprises, for each arm (31, 32), a support (41, 42) relative to which one end of said arm (31, 32) is hinged,
and **in that** each support (41, 42) is movable along the corresponding side member (11), using a motorization system (341, 342) so as to be able to adjust the angle formed between the two arms (31, 32) and to be able to adjust the position of the attachment system (3) along said side member (11).

4. The device according to claim 3, **characterized in that** the two supports (41, 42) are connected to one another by a shaft (43), preferably a splined shaft, that extends parallel to the side member (11) and that can be driven to pivot about its axis by a motorization system (343), and **in that** the two arms (31, 32) are mounted secured in rotation with said shaft (43) so as to allow the angular position to be adjusted of the assembly of the two arms (31, 32) and of the clamping device (33) about an axis parallel to the axis of the side member.

5. The device according to one of the preceding claims, **characterized in that** the ends of each side member (11) are hinged, one relative to a cross-member (12) of the frame, the other relative to the other cross-member (12); and the ends of the side members (11) hinged to a same cross-member (12) are mounted movably relative to one another along this cross-member (12).

6. The device according to one of the preceding claims, **characterized in that** each of the faces of the frame (10) is provided with said attachment systems (3).

7. The device according to one of the preceding claims in combination with claim 2, **characterized in that** the clamping device (33) of each of said attachment systems (3) comprises a clamping mechanism that can be activated and deactivated, such as a clamping mechanism with a knuckle joint or toggle clamp, making it possible to grip said panel (9),
the corresponding attachment system (3) preferably comprising a motor (330) allowing said clamping mechanism to be activated or deactivated.

8. A facility comprising:
- a retaining device according to one of the preceding claims,
- a support structure (7) of said retaining device, which comprises:
• a first coupling system (71) allowing one of the cross-members (12) of said frame (10) to be coupled to said support structure (7) and allowing said cross-member (12) to slide along an axis parallel to the plane of the frame (10) and orthogonal to said cross-member (12);
• a second coupling system (72) allowing the other cross-member (12) to be coupled to said support structure (7) and, preferably, allowing the frame (10) to tilt about an axis parallel to said cross-member (12).

9. The facility according to claim 8, said facility comprising a riveting machine (100) that includes:
- a lower part (101), called lower brace, and
- an upper part (102), called riveting head, between which the panel retaining device is positioned.
